## Europäisches Patentamt
## European Patent Office
## Office européen des brevets

(19)

(11) Numéro de publication: **0 161 951**
**B1**

(12)

# FASCICULE DE BREVET EUROPÉEN

(45) Date de publication du fascicule du brevet:
20.07.88

(51) Int. Cl.⁴: **G 01 C 19/02**, G 01 C 19/28, G 01 C 19/34

(21) Numéro de dépôt: 85400521.2

(22) Date de dépôt: 19.03.85

(54) **Système gyroscopique pour la détection d'écarts de trajectoire d'un mobile se déplaçant de façon au moins approximativement rectiligne.**

(30) Priorité: 23.03.84 FR 8404534

(43) Date de publication de la demande:
21.11.85 Bulletin 85/47

(45) Mention de la délivrance du brevet:
20.07.88 Bulletin 88/29

(84) Etats contractants désignés:
CH DE GB IT LI SE

(56) Documents cité:
FR-A-1 067 951
US-A-3 439 170
US-A-3 900 843

(73) Titulaire: **AEROSPATIALE Société Nationale Industrielle, 37, Boulevard de Montmorency, F-75781 Paris Cédex 16 (FR)**

(72) Inventeur: **Dubernet, Robert, 2, Alleé Debussy Forges- Les- Bains, F-91470 Limours (FR)**
Inventeur: **Le Goff, Jean- François, 6 rue Gagnée, F-94400 Vitry- Sur- Seine (FR)**

(74) Mandataire: **Bonnetat, Christian, Cabinet PROPI Conseils 23 rue de Léningrad, F-75008 Paris (FR)**

LIBER, STOCKHOLM 1988

EP 0 161 951 B1

## Description

La présente invention concerne un système gyroscopique destiné à la détection d'écarts de trajectoire d'un mobile comportant des moyens de correction d'écart de trajectoire, par exemple un missile, se déplaçant de façon au moins approximativement rectiligne. Un système gyroscopique tel que défini par le préambule de la revendication 1 est connu du document US-A-3 900 843.

On sait que le guidage des engins met en oeuvre des systèmes gyroscopiques, montés à bord de ceux-ci. Généralement, ces systèmes sont complexes, encombrants et onéreux. La présente invention a pour objet un système gyroscopique simple, de dimensions réduites et de faible coût, pouvant être utilisé pour la détection d'écart en site et en azimut d'un mobile se déplaçant sur une trajectoire au moins approximativement rectiligne, ce mobile tournant autour de son axe longitudinal.

Notamment dans le cas de missile anti-char, la trajectoire habituellement recherchée est une ligne droite passant par l'oeil du tireur et par la cible. Le missile est donc généralement asservi à s'aligner continuellement sur cette ligne théorique. Les corrections de trajectoire sont d'autant plus importantes que l'écart mesuré entre le missile et cette ligne est important. Le vol du missile est donc caractérisé par une ligne approximativement droite. Il est fréquent que l'axe de lancement du missile soit confondu avec cet axe oeil-cible. En conséquence, l'axe du missile est donc parallèle à cet axe oeil-cible.

Le système gyroscopique conforme à l'invention est caractérisé dans la revendication 1.

L'axe de la toupie du gyroscope équipant le système gyroscopique est parallèle à l'axe oeil-cible et puisque après son lancement le mobile suit une trajectoire rectiligne, c'est-à-dire garde la même attitude, les écarts de celle-ci se transcrivent sur la position du cadre primaire. Les écarts d'attitude en site et en azimut du mobile sont donc intégralement détectés dans les écarts de position du cadre primaire du gyroscope. On remarquera que le système selon l'invention s'applique aussi bien aux mobiles fixes en rotation autour de leur axe longitudinal qu'aux mobiles tournants. En effet, la rotation d'un mobile autour de son axe n'a d'autre influence que d'ajouter ou de retrancher la vitesse de rotation à celle de la toupie, ce qui est généralement négligeable.

Le détecteur de variation de position dudit cadre primaire peut être optique et/ou électrique, par exemple.

Notamment dans le cas d'un mobile fixe en rotation autour de son axe et d'un détecteur optique, ce détecteur optique peut comporter une source lumineuse et des éléments photosensibles répartis autour de ladite source lumineuse, de sorte qu'un faisceau émis par ladite source et réfléchi par ledit cadre primaire, ou un miroir solidaire de celui-ci, revienne à ladite source lumineuse s'il n'existe aucun écart de trajectoire ou atteigne au moins l'un desdits éléments photosensibles en cas d'écart de trajectoire. On remarquera que, par rapport à un repère orthogonal comportant un axe horizontal et un axe vertical se coupant sur le faisceau émis par ladite source et disposés dans un plan vertical dans lequel se trouvent lesdits éléments photosensibles, il est facile de connaître les coordonnées de l'élément photosensible recevant le faisceau réfléchi et donc les écarts en site et en azimut du mobile par rapport à sa trajectoire. La position de l'élément photosensible excité donne donc, par ses composantes, l'amplitude des corrections en site et en azimut à effectuer.

Lorsque, en conformité avec le système gyroscopique revendiqué le mobile est en rotation autour de son axe, la spécificité des corrections en site et en azimut disparaît pour faire place à une correction unique de trajectoire, de sorte que les missiles tournants comportent généralement des moyens de correction de trajectoire uniques, tels qu'une gouverne de pilotage (par exemple par déviation de jet de la tuyère). Bien entendu, pour corriger une erreur de trajectoire détectée, il est indispensable que cette gouverne unique intervienne à un instant précis de la rotation du mobile autour de son axe et avec une amplitude appropriée.

Aussi, selon l'invention, à chaque tour du mobile tournant autour de son axe, le détecteur engendre, pour lesdits moyens de correction de trajectoire, une impulsion (électrique ou lumineuse) de commande dont l'instant d'apparition est tel qu'elle commande lesdits moyens de correction d'écarts de trajectoire au moment où ceux-ci peuvent être efficaces en vue d'une réduction dudit écart, et dont la durée est liée à l'amplitude de celui-ci. L'instant d'apparition de l'impulsion de commande peut correspondre au momet précis où lesdits moyens de correction d'écart peuvent être efficaces; cependant, à cause de l'inévitable inertie de tels moyens de correction, il est préférable que l'instant d'apparition soit avancé par rapport audit moment, afin que lesdits moyens de correction de trajectoire soient commandés légèrement en avance pour être pleinement efficaces au moment opportun.

Dans un premier mode de réalisation optique, le détecteur comporte une source lumineuse et un élément photosensible et est associé à un secteur de miroir convexe sphérique aligné au moins approximativement avec la composante de correction de trajectoire engendrée par lesdits moyens de correction d'écart, de sorte que le faisceau émis par ladite source lumineuse ne puisse être réfléchi par ledit secteur en direction dudit élément photosensible, lorsque l'écart de trajectoire est nul, et que ledit secteur engendre, à chaque tour de la rotation du mobile, une impulsion lumineuse qu'il réfléchit en direction dudit élément photosensible, lorsqu'il existe un écart de trajectoire. Il va de soi que, à cause de la forme même du secteur réfléchissant, la durée de l'impulsion lumineuse est d'autant plus grande que l'amplitude de l'écart est plus important.

Dans une variante de réalisation, de type électrique, le détecteur comporte une source électrique et est associé à l'ensemble d'un secteur et d'un palpeur conducteurs de l'électricité, ledit secteur étant aligné au moins approximativement avec la composante de correction de trajectoire, de sorte qu'aucun courant ne passe entre ledit secteur et ledit palpeur, lorsque l'écart de trajectoire est nul et qu'une impulsion de courant soit engendrée, à chaque tour de la rotation du mobile, entre ledit secteur et ledit palpeur, lorsqu'il existe un écart de trajectoire.

La source électrique peut être à basse ou haute tension. Dans le cas de la haute tension, particulièrement appropriée à l'utilisation en atmosphères polluées, le palpeur peut être constitué par une pointe qui engendra un arc électrique en regard du secteur conducteur.

Le secteur conducteur peut être convexe et solidaire du cadre primaire du gyroscope, alors que le palpeur ou la pointe est fixé au détecteur. Au contraire, le secteur conducteur peut être concave et solidaire du détecteur, alors que le palpeur ou la pointe est fixé au cadre primaire.

Les figures du dessin annexé feront bien comprendre comment l'invention peut être réalisée. Sur ces figures, des références identiques désignent des éléments semblables.

La figure 1 illustre un exemple de système d'arme à missile auquel l'invention est applicable.

La figure 2 est une vue schématique d'un mode de réalisation du système gyroscopique de détection de type connu.

Les figures 3a et 3b sont des vues schématiques du dessus, illustrant les positions relatives du cadre primaire et du détecteur, respectivement lorsque l'axe de la toupie du gyroscope est confondu avec celui d'un mobile ne tournant pas autour de son axe et lorsque l'axe de la toupie du gyroscope s'écarte de celui dudit mobile, par suite d'un écart d'attitude en azimut.

Les figures 3c et 3d sont des vues schématiques latérales, illustrant les positions relatives du cadre primaire et du détecteur, respectivement lorsque l'axe de la toupie du gyroscope est confondu avec celui dudit mobile ne tournant pas autour de son axe et lorsque l'axe de la toupie du gyroscope s'écarte de celui dudit mobile, par suite d'un écart d'attitude en site.

La figure 4 montre schématiquement la face sensible du détecteur utilisé dans les systèmes des figures 3a à 3d.

Les figures 5a et 5b correspondent respectivement aux figures 3a et 3b dans le cas d'un mobile tournant autour de son axe.

Les figures 5c et 5d correspondent respectivement aux figures 3c et 3d dans le cas d'un mobile tournant autour de son axe.

La figure 6 est une vue de face du miroir utilisé dans le système des figures 5a à 5d.

La figure 7 est une variante de réalisation préférée du miroir de la figure 6.

La figure 8 illustre la façon dont on peut donner de l'avance à la commande des moyens de correction de trajectoire.

Les figures 9 et 10 sont des variantes de réalisation du système gyroscopique selon l'invention.

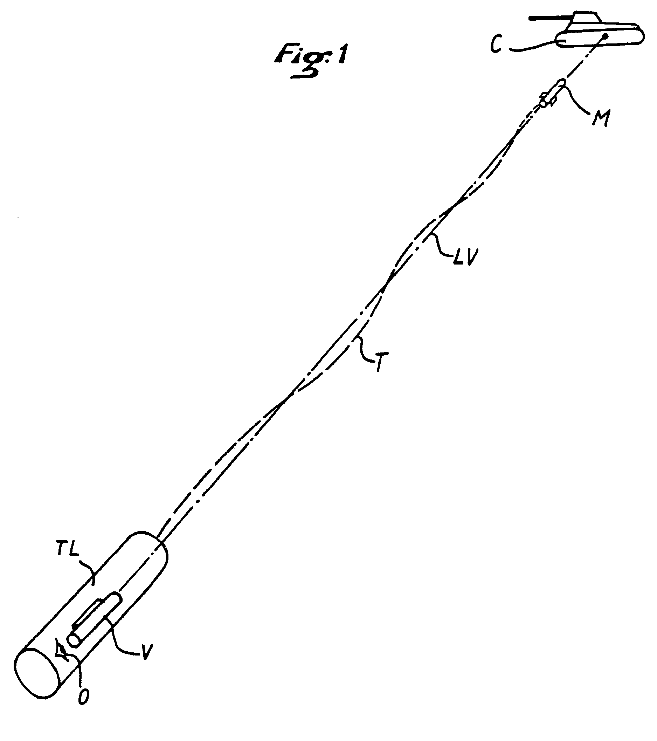

Le système d'arme montré par la figure 1 comporte un tube de lancement TL pourvu d'un viseur V pour l'oeil O d'un tireur et susceptible de viser une cible C en définissant une ligne de visée LV. Il peut lancer un missile M se déplaçant le long d'une trajectoire T asservie à la ligne de visée LV.

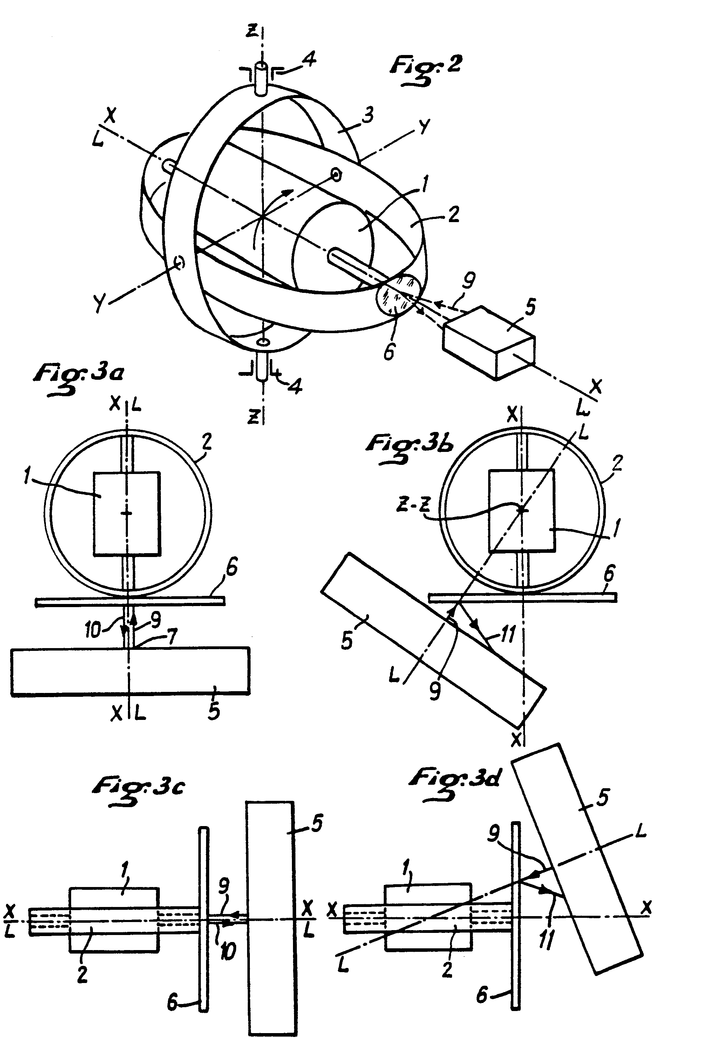

Le système gyroscopique de type connu montré par la figure 2 et destiné à la détection d'écarts en site et en azimut d'un mobile M se déplaçant sur une trajectoire T au moins approximativement rectiligne, comporte une toupie 1, un cadre primaire 2 et un cadre secondaire 3. La toupie 1 est montée sur le cadre primaire 2 pour pouvoir tourner autour de son axe X-X, ledit cadre primaire 2 étant lui-même articulé sur le cadre secondaire 3 autour d'un axe Y-Y orthogonal et coplanaire à l'axe X-X, tandis que le cadre secondaire 3, grâce à des paliers 4, est articulé sur le mobile autour d'un axe Z-Z orthogonal aux axes X-X et Y-Y, les trois axes X-X, Y-Y et Z-Z définissant un système d'axes orthogonaux, dont l'origine se trouve au centre de la toupie 1.

Sur la figure 2, le mobile sur lequel est monté le système gyroscopique n'est représenté que par les paliers 4 et son axe longitudinal L-L, avec lequel est aligné l'axe X-X de la toupie 1 qui est donc confondu ou au moins parallèle avec la trajectoire rectiligne suivie par ledit mobile.

Le système gyroscopique de la figure 2 comporte de plus un détecteur 5, solidaire du mobile, centré sur l'axe L-L et disposé en bout de l'axe X-X. Un miroir 6 est porté par le cadre primaire 2 et centré sur l'axe X-X.

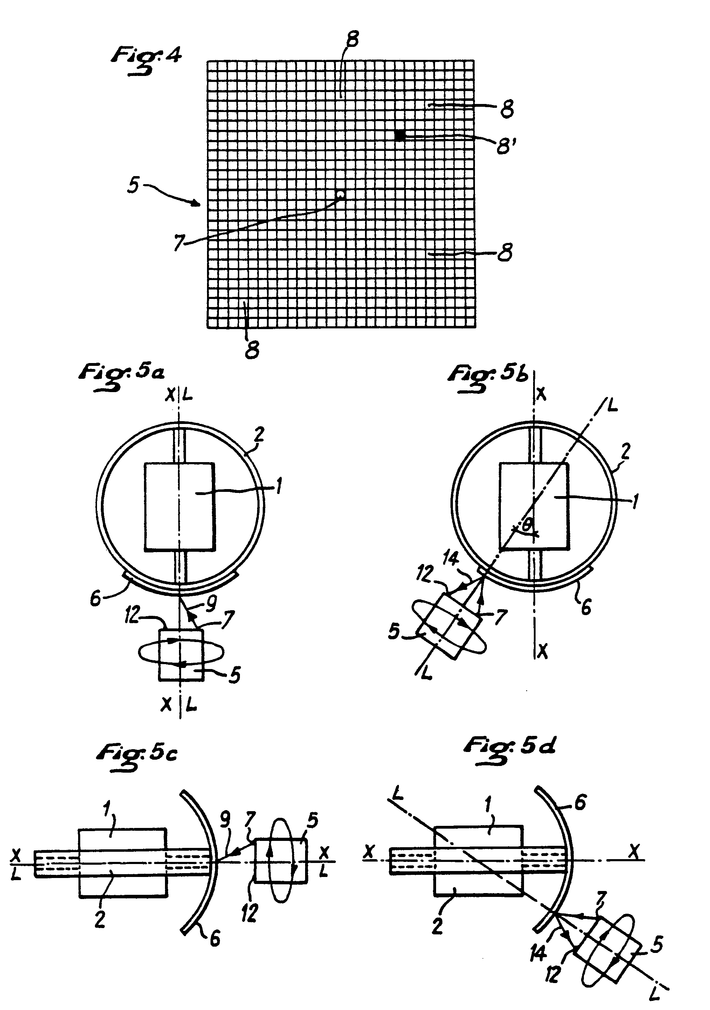

Dans le mode de réalisation non revendiqué représenté schématiquement sur les figures 3a, 3b, 3c, 3d et 4, et particulièrement réservé aux mobiles fixes en rotation autour de leur axe longitudinal, le détecteur 5 est de type optique et comporte une source lumineuse 7 et des éléments photosensibles 8 répartis en lignes et en colonnes autour de ladite source lumineuse 7, qui se trouve à l'origine desdites lignes et desdites colonnes (voir la figure 4). Lorsque les axes X-X de la toupie et L-L du mobile sont confondus (voir les figures 3a et 3c), la source 7 émet un faisceau lumineux 9 qui est réfléchi par le miroir 6 vers ladite source 7, de sorte qu'aucun élément photosensible 8 n'est excité par le faisceau réfléchi 10.

En revanche, lorsque le mobile présente une erreur en azimut (voir la figure 3b) et/ou en site (voir la figure 3d), le faisceau lumineux 9 émis par la source 7 donne naissance, à partir du miroir 6, à un faisceau réfléchi 11, qui frappe au moins un élément photosensible 8' de la pluralité d'éléments 8. La position de l'élément photosensible 8' excité est caractéristique de l'écart en site et en azimut et le détecteur 5 peut donc élaborer un signal de correction approprié qu'il adresse aux moyens de correction de trajectoire (non représentés) prévus sur ledit mobile.

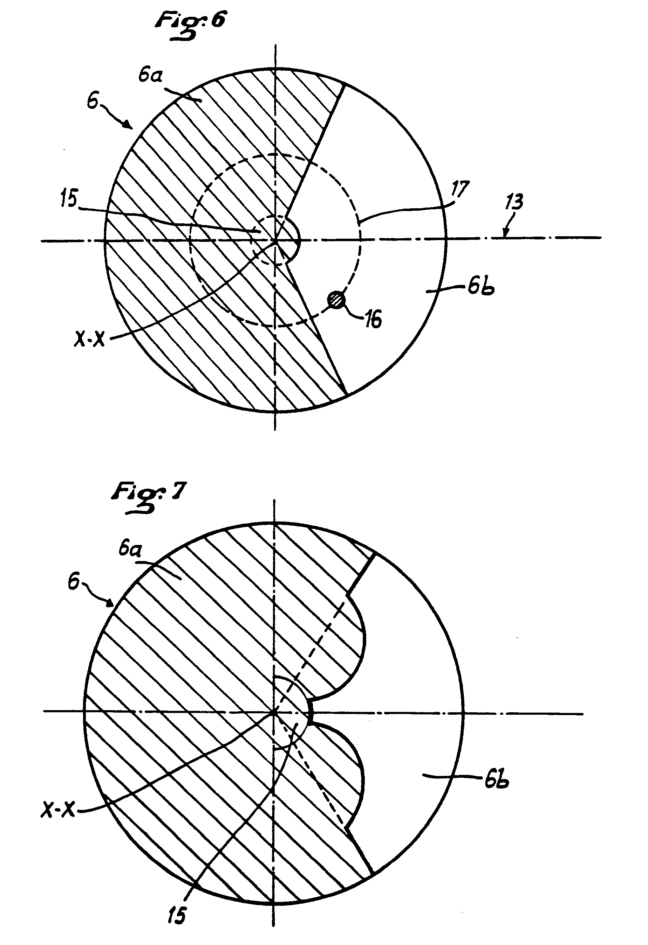

Dans la première variante de réalisation conforme à l'invention et représentée schématiquement sur les figures 5a, 5b, 5c et 5d et particulièrement réservé aux mobiles tournant autour de leur axe longitudinal L-L, le détecteur 5 comporte une source lumineuse 7 et un élément photosensible 12. Le miroir 6 est du type sphérique convexe, centré sur l'intersection des axes X-X et L-L. Comme le montre la figure 6, le miroir sphérique 6 comporte une large partie non réfléchissante 6a et un secteur réfléchissant 6b.

Le secteur réfléchissant 6b est disposé symétriquement par rapport à la composante de correction de trajectoire 13 engendrée par les moyens de correction de trajectoire (non représentés) portés par le mobile.

Lorsque les axes X-X de la toupie et L-L du mobile sont confondus (voir les figures 5a et 5c), la source 7 émet un faisceau lumineux 9, qui tombe dans la zone centrale de la partie non réfléchissante 6a du miroir 6, de sorte qu'aucun faisceau n'est réfléchi en direction de l'élément photosensible 12.

En revanche, lorsqu'une erreur en azimut (voir la figure 5b) et/ou en site (voir la figure 5d) apparaît le faisceau lumineux 9 frappe le miroir 6 à l'extérieur de la zone centrale 15. Par suite, de la rotation du mobile autour de son axe L-L, le point d'impact 16 du faisceau lumineux 9 sur ledit miroir 6 décrit un cercle 17 sur celui-ci. En conséquence, à chaque tour, lorsque le point d'impact 16 passe dans le secteur réfléchissant 6b, celui-ci adresse un rayon réfléchi 14 à l'élément photosensible 12. Ce dernier reçoit donc une impulsion de lumière à chaque tour. La durée de cette impulsion de lumière dépend du rayon de la trajectoire 17 et donc de l'amplitude des écarts en site et en azimut. L'élément photosensible 12 transforme cette impulsion de lumière en impulsion électrique, susceptible de commander en conséquence les moyens de correction de trajectoire.

La figure 7 illustre un mode de réalisation préféré pour un miroir 6, permettant une bonne définition des durées d'impulsions lumineuses en fonction de l'amplitude des écarts.

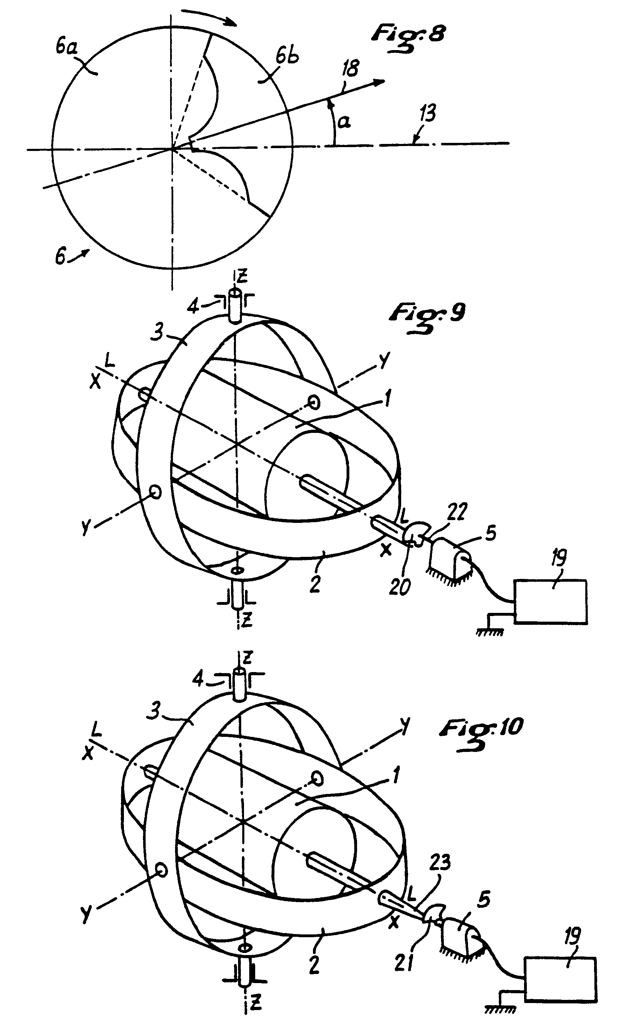

Sur la figure 8, on a illustré que, pour tenir compte de l'inertie de réponse desdits moyens de correction de trajectoire, on pouvait décaler l'axe 18 du secteur réfléchissant 6b d'un angle a par rapport à la composante de correction 13, de façon à donner de l'avance à la commande desdits moyens de correction.

Dans les autres variantes de réalisation montrées par les figures 9 et 10, le détecteur 5 comporte une source électrique 19 à haute tension et est associé à l'ensemble d'un secteur conducteur 20 (ou 21) et d'une pointe conductrice 22 (ou 23). Dans ces modes de réalisation les secteurs conducteurs 20 et 21 remplacent les secteurs réfléchissants 6b des figures 6, 7 et 8, tandis que les points conducteurs 22 et 23 jouent le rôle du faisceau incident 9 des figures 5a à 5d.

Dans le dispositif de la figure 9, le secteur conducteur est convexe et solidaire du cadre primaire 2, tandis que la pointe 22 est solidaire du détecteur 5. Dans le dispositif de la figure 10, la pointe 23 est solidaire du cadre primaire 2, tandis que le secteur conducteur 21 est concave et solidaire du détecteur 5.

Sur la base des explications précédentes, on comprend aisément qu'en cas d'écart de trajectoire, à chaque tour de la rotation du mobile, une impulsion électrique sera engendrée par l'ensemble 20 - 22 ou 21 - 23, la durée ce cette impulsion étant représentative de l'amplitude de l'écart. Le détecteur 5 pourra donc utiliser cette impulsion pour adresser des ordres de correction appropriés aux moyens de correction de trajectoire.

**Revendications**

1. Système gyroscopique destiné à la détection d'écarts de trajectoire d'un mobile comportant des moyens de correction d'écart de trajectoire et se déplaçant de façon au moins approximativement rectiligne et pourvu d'un gyroscope comportant une toupie (1) montée rotative autour de son axe (X-X) par rapport à un cadre primaire (2), lui-même articulé sur un cadre secondaire (3) autour d'un axe (Y-Y) orthogonal audit axe (X-X) de la toupie (1), alors que ledit cadre secondaire (3) est articulé par rapport audit mobile autour d'un axe (Z-Z) orthogonal aux axes de la toupie (1) et du cadre primaire, ledit axe (X-X) de la toupie (1) étant disposé de façon à être parallèle, sinon confondu, avec l'axe longitudinal (L-L) du mobile, un détecteur (5) solidaire dudit mobile étant prévu pour détecter les variations relatives de positions dudit axe longitudinal (L-L) du mobile par rapport audit axe (X-X) de la toupie (1), ledit détecteur (5) coopérant avec la région du cadre primaire (2) dans laquelle passe l'axe (X-X) de ladite toupie (1) pour détecter les variations de position dudit cadre primaire (2), caractérisé en ce que, ledit mobile tournant autour de son axe (L-L), à chaque tour de rotation dudit mobile, le détecteur (5) engendre, une impulsion de commande dont l'instant d'apparition est tel qu'elle commande lesdits moyens de correction d'écart de trajectoire au moment où ceux-ci peuvent être efficaces en vue d'une réduction dudit écart et dont la durée est liée à l'amplitude dudit écart.

2. Système gyroscopique selon la revendication 1, dans lequel lesdits moyens de correction d'écart de trajectoire présentent une inertie de fonctionnement, caractérisé en ce que l'instant d'apparition de ladite impulsion de commande est avancé par rapport audit moment où les moyens de correction d'écart de trajectoire peuvent être efficaces, afin que lesdits moyens soient commandés en avance pour être pleinement efficaces au moment opportun.

3. Système gyroscopique selon l'une des revendications 1 ou 2, caractérisé en ce que lesdits moyens de correction d'écart de trajectoire engendrent une composante (13) de correction de trajectoire transversale audit mobile, et en ce que ledit détecteur (5) comporte une source lumineuse (7) et un élément photosensible (12) et est associé à un secteur (6b) de miroir convexe sphérique aligné au moins approximativement avec ladite composante (13) de correction de trajectoire, de sorte que le faisceau (9) émis par ladite source lumineuse (7) ne puisse être réfléchi par ledit secteur en direction dudit élément photosensible, lorsque l'écart de trajectoire est nul, et que ledit secteur (6b) engendre, à chaque tour de rotation du mobile, une impulsion lumineuse qu'il réfléchit en direction dudit élément photosensible (12), lorsqu'il existe un écart de trajectoire.

4. Système gyroscopique selon l'une des revendications 1 ou 2, caractérisé en ce que lesdits moyens de correction d'écart de trajectoire engendrent une composante (13) de correction de trajectoire transversale audit mobile, et en ce que ledit détecteur (5) comporte une source électrique (19) et est associé à l'ensemble d'un secteur (20 ou 21) et d'un palpeur (22 ou 23) conducteurs de l'électricité, ledit secteur étant aligné au moins approximativement avec ladite composante de correction de trajectoire, de sorte qu'aucun courant ne passe entre ledit secteur et ledit palpeur, lorsque l'écart de trajectoire est nul, et qu'une impulsion de courant soit engendrée, à chaque tour de la rotation du mobile, entre ledit secteur et ledit palpeur, lorsqu'il existe un écart de trajectoire.

5. Système gyroscopique selon la revendication 4, caractérisé en ce que la source électrique est à haute tension et en ce que ledit palpeur (22,23) est une pointe.

**Patentansprüche**

1. Gyroskopsystem zur Erfassung von Flugbahnabweichungen eines beweglichen Körpers, welcher Mittel zur Korrektur von Flugbahnabweichungen enthält, sich annähernd geradlinig fortbewegt und mit einem Gyroskop versehen ist, der einen zu seiner Achse (X-X) drehbar angeordneten Kreisel (1) enthält, und dies bezogen auf einen Primärrahmen (2), der selbst auf einem Sekundärrahmen (3) um eine zur genannten Achse (X-X) des Kreisels (1) orthogonal angeordneten Achse (Y-Y) gelenkt ist, wobei besagter Sekundärrahmen (3) in Bezug auf den beweglichen Körper um eine um die Achsen des Kreisels (1) und des Primärrahmens orthogonal angeordneten Achse (Z-Z) angelenkt ist, wobei die Achse (X-X) des Kreisels so angeordnet ist, daß sie parallel, wenn nicht zusammenlaufend zur Längsachse (L-L) des beweglichen Körpers ist, und ein formschlüssig mit dem beweglichen Körper verbundener Detektor (5) vorgesehen ist, um die relativen Positionsveränderungen der besagten Längsachse (L-L) des beweglichen Körpers, bezogen auf die erwähnte Achse (X-X) des Kreisels (1) aufzuspüren, wobei der Detektor (5) mit dem Bereich des Primärrahmens (2) zusammenwirkt, durch welchen die Achse (X-X) des Kreisels (1) hindurchgeht, um die Positionsänderungen des Primärrahmens (2) aufzufinden,

dadurch gekennzeichnet, daß bei jeder Drehung des sich um seine Achse (L-L) drehenden beweglichen Körpers der Detektor (5) einen Steuerimpuls erzeugt, dessen Zeitpunkt des Auftretens so vorgesehen ist, daß er die erwähnten Laufbahnabweichungs-Korrekturmittel steuert und zwar in dem Augenblick, wo sie hinsichtlich einer Verringerung der Abweichung wirksam sein können und dessen Dauer an die Amplitude der Abweichung gebunden ist.

2. Gyroskopsystem gemäß Anspruch 1, in welchem die erwähnten Laufbahnabweichungs-Korrekturmittel eine Betriebsträgheit aufweisen, dadurch gekennzeichnet, daß der Zeitpunkt des Auftretens des Steuerimpulses hinsichtlich des Moments, wo die Laufbahnabweichungs-Korrekturmittel wirksam werden können, vorgezogen wird, damit erwähnte Mittel im voraus gesteuert werden, um im zweckmäßigen Moment wirksam zu sein.

3. Gyroskopsystem gemäß einem der vorhergehenden Ansprüche 1 oder 2, dadurch gekennzeichnet, daß die erwähnten Laufbahnabweichungs-Korrekturmittel eine Bahnkorrekturkomponente (13) erzeugen, die quer zum beweglichen Körper verläuft, und daß erwähnter Detektor (5) eine Lichtquelle (7) und ein Lichtempfindliches Element (12) enthält und mit einem wenigstens annähernd mit der Laufbahnkorrekturkomponente (13) ausgerichteten spherischen, konvexen Spiegelsektor (6 b) verbunden ist, so daß der von der Lichtquelle (7) ausgesandte Strahl (9) vom erwähnten Sektor nicht auf das lichtempfindliche Element reflektiert werden kann, wenn die Laufbahnabweichung Null ist, und daß erwähnter Sektor (6 b) bei jeder Umdrehung des beweglichen Körpers einen Lichtimpuls in Richtung des lichtempfindlichen Elementes (12) erzeugt, wenn eine Bahnabweichung besteht.

4. Gyroskopsystem nach einem der Ansprüche 1 oder 2, dadurch gekennzeichnet, daß die erwähnten Laufbahnabweichungs-Korrekturmittel eine Bahnkorrekturkomponente (13) erzeugen, die quer zum beweglichen Körper liegt, und daß der Detektor (5) eine elektrische Quelle (19) enthält und mit der Einheit Sektor (20 oder 21) und Fühler (22 oder 23) verbunden ist, die stromführend sind, wobei der Sektor annähernd mit der Bahnkorrekturkomponente fluchtet, so daß kein Strom zwischen dem Sektor und dem Fühler fließen kann, wenn die Bahnabweichung Null ist, und daß bei jeder Drehung des beweglichen Körpers ein Stromimpuls zwischen dem Sektor und dem Fühler erzeugt wird, wenn eine Bahnabweichung besteht.

5. Gyroskopsystem nach Anspruch 4, dadurch gekennzeichnet, daß die elektrische Quelle hochspannig ist und daß der Fühler (22, 23) eine Spitze darstellt.

## Claims

1. Gyroscopic system intended for detecting deviations in the trajectory of a moving object comprising means for correcting trajectory deviations and having at least approximately a linear movement and provided with a gyroscope comprising a top (1) rotatable about its axis (X-X) with respect to a primary frame (2), itself articulated upon a secondary frame (3) about an axis (Y-Y) orthogonal to said axis (X-X) of the top (1), whilst said secondary frame (3) is articulated with respect to said moving object about an axis (Z-Z) orthogonal to axes of the top (1) and the primary frame, said axis (X-X) of the top (1) being arranged to be parallel, if not identical, to the longitudinal axis (L-L) of the moving object, a sensor (5) fast with said moving object being provided for detecting the relative variations of position of said longitudinal axis (L-L) of the moving object with respect to said axis (X-X) of the top (1), said sensor (5) cooperating with the zone of the primary frame (2) in which passes the axis (X-X) of said top (1) for detecting the variations of position of said primary frame (2), characterized in that, said moving object turning about its axis (L-L), at each turn of rotation of said moving object, the sensor (5) generates a control impulse the appearing moment of which is such that it controls said trajectory deviation correcting means at the time when the latter can be efficient in order to reduce said deviation, and the duration of which depends on the magnitude of said deviation.

2. Gyroscopic system according to claim 1, in which said trajectory deviation correcting means present an operating inertia, characterized in that the appearing moment of said control impulse is advanced with respect to said time when the trajectory deviation correcting means can be efficient, in order that said means be controlled in advance to be fully efficient at the appropriate time.

3. Gyroscopic system according to one of claims 1 or 2, characterized in that said trajectory deviation correcting means generate a trajectory correction component (13) transverse to said moving object, and in that said sensor (5) comprises a light source (7) and a photosensible element (12) and is associated with a sector (6b) of a spherical convex mirror, aligned at least approximately with said trajectory correction component (13), so that the beam (9) emitted by said light source (7) cannot be reflected by said sector towards said photosensible element, when the trajectory deviation is zero, and that said sector (6b) generates, at each turn of rotation of the moving object, a light impulse which is reflected towards said photosensible element (12), when there exists any trajectory deviation.

4. Gyroscopic system according to one of claims 1 or 2, characterized in that said trajectory deviation correcting means generate a trajectory correction component (13) transverse to said moving object, and in that said sensor (5) comprises a light source (19) and is associated with the assembly of a sector (20 or 21) and a feeler (22 or 23) conducting electricity, said sector being aligned at least approximately with said trajectory correction component, so that no current passes between said sector and said feeler, when the trajectory deviation is zero, and that a current impulse is generated, at each turn of rotation of the moving object, between said sensor and said feeler, when there exists any trajectory deviation.

5. Gyroscopic system according to claim 4, characterized in that the electric source is at hight voltage and in that said feeler (22,23) is a tip.

Fig. 1

0 161 951

Fig.2

Fig.3a

Fig.3b

Fig.3c

Fig.3d

3

Fig. 4

Fig. 5a

Fig. 5b

Fig. 5c

Fig. 5d

0 161 951

Fig. 6

Fig. 7

7

Fig. 8

Fig. 9

Fig. 10